# EUROPEAN PATENT APPLICATION

(11) **EP 1 182 047 A1**
(43) Date of publication of application: **27.02.2002**
(21) Application number: 00118587.5
(22) Date of filing: 26.08.2000
(51) Int. Cl.: B41J 29/393, B41J 13/00

(54) **Method and apparatus for printing a test pattern**

(71) Applicant: Hewlett-Packard Company, A Delaware Corporation, Palo Alto, CA 94304 (US)
(72) Inventor: Soler, Pau, 08006 Barcelona (ES); Rodriguez, Francisco Javier, 08304 Mataro, Barcelona (ES); Vinas, Roger, 08190 Sant Cugat del Valles, Barcelona (ES)
(74) Representative: Yennadhiou, Peter

(57) **Abstract**

A method and apparatus for printing test patterns on a print medium which dynamically changes the relative position of elements of the test pattern dependent on the measured size of the print medium the user wishes the test pattern to be printed on. The test pattern layout may be optimised to expend as little print media as possible in the printing of the test pattern or to maximise the accuracy of measurements taken from the test pattern. Preferably, the size of the media is automatically determined by the printing device and once the test pattern has been printed it is automatically interpreted by the printing device and used to set or adjust an operational parameter of the printing device, for example a colour calibration parameter.

## Description

The present invention relates to a method and apparatus for printing test patterns, and particularly although not exclusively to a method and apparatus for printing test patterns which vary in accordance with the size of the print medium to be utilised.

Modern printing devices such as inkjet printers perform a number of test or diagnostic prints to ensure that they are functioning correctly or are correctly adjusted or to calibrate aspects of their function. These prints will be called herein "test patterns", and this term should be understood to include all patterns, prints or images which are not sent to a printer by a user of the printer. Test patterns may be requested to be printed by a user of a printer to confirm the correct functioning of the printer and can often, if the printer is shown to be functioning incorrectly, give the user an adjustment value which he may apply to a operational parameter of the printer. Alternatively, the printing of a test pattern may be initiated automatically by the printer, being triggered by a certain action or set of circumstances for example, by the user changing the inkjet cartridges of the printer, the print media loaded in the printer, or by a change in the ambient temperature or humidity.

As can be seen, the number of occasions when a test pattern may be printed can be quite high, particularly since often a different test pattern is required for each operational parameter of the printer that needs to be checked or adjusted. Each time a test pattern is printed ink and print media are expended, which of course users of the printer are sensitive to. This can be a particular problem for large format printers, where the width of media used could be up to 60 inches or more and where typically many specialised media such as canvas or vinyl media are used which have a high cost. The present invention should not however be thought to apply only to these printers, but in contrast may be applied to any size printer.

There have been efforts in the past to reduce the amount of ink expended in printing test patterns by reducing the size of the test patterns and by utilising a single test pattern to assess more than one printer parameter. Clearly these efforts have also reduced to some extent the amount of print media that is expended and furthermore there have been efforts to design a fixed layout of test pattern that will fit on a small piece of media, for example an A4 sized piece of media. However, given that users demand ever greater performance and quality from printers, thus in some cases necessitating the use of more test patterns, while at the same time being ever more conscience of the costs of printing and thus regarding negatively any printer that "wastes" media in printing test patterns, there is a need for greater refinement and improvement in the use of print media for printing test patterns.

The present invention provides such refinement and aims to improve or ameliorate at least to some extent the disadvantages of prior art techniques for printing test pattems.

According to a first aspect of the present, there is provided a method of printing a test pattern for determining an operational parameter of a printing device comprising the steps of determining the size of a print medium presently loaded in the printing device, adjusting, in accordance with the determined size of the print medium, the relative position on the print medium of a plurality of elements of the test pattern to be printed and printing the test pattern on the print medium. The present invention thus provides flexibility in the layout of the various elements of a test pattern which, when the size of the print medium loaded in the printer is known, means that the layout can be chosen appropriately to match the available media. A particular insight that has enabled embodiments of the present invention, is that the layout of test patterns need not be considered as a whole but rather can often be split into a number of elements which are separable and which can be advantageously printed in different locations relative to each other.

In the broadest aspect of the present invention, it will be noticed that the amount of print medium expended in printing a particular test pattern using the present invention may be decreased or indeed may be increased. The invention provides the flexibility to do both by allowing the layout of the elements of the test pattern to be changed according to the size of the media on which it is to be printed. One reason that this may be desirable is if such an increased use of media leads to a more accurate determination of the operational parameter of the printer.

However, in preferred embodiments of the present invention, during the adjusting step, the elements of the test pattern are arranged in a layout which substantially minimises the amount of print medium that is expended to print the whole test pattern.

It has been found that, particularly but not exclusively for large format printers which may hold a roll of print media, many of the advantages of the invention may be realised if only the width of the print medium is determined. Then during the adjusting step, as many test pattern elements as will fit across the determined width of the print medium are arranged to be printed. Once the maximum number of test pattern elements that can be printed across the width of the print medium is reached, then advantageously any remaining test pattern elements are arranged to be printed subsequent to one or more media advance movements by the printing device. Thus when a roll of media is mounted in a printer, embodiments of the present invention will optimise the amount of media utilised in printing a test pattern by using the full width of the media.

Alternatively, during the size determining step, both the width and the height of the print medium is determined, thus facilitating the use of sheets of media for printing test patterns in addition to rolls of media. Preferred embodiments of the present invention will thus enable the layout of a test pattern to be fitted onto an available spare scrap of media that the user may have, for example from cropping images that have previously been printed on the roll media which is loaded in the printer. Hence an important advantage of this embodiment of the invention is that the user may temporarily unload the roll media and insert a cut sheet of media on which to print the test pattern in order not to waste any of the roll media.

The size of the print medium may be determined by the user of the printer and entered into the printer, however preferably the printer automatically determines the size of the medium.

The user may also interpret the printed test pattern and if necessary input an operational parameter or adjust an operational parameter determined from the test pattern into the printer. However, preferably the printer automatically measures the printed test pattern, most preferably using an optical scanning technique, and calculates and makes any correction necessary to the printers operational parameters. Advantageously, in this embodiment where the test pattern is scanned, the layout of the elements of test pattern is arranged to substantially minimise the number of scans of the pattern required and thus the time taken.

It has been found that a class of test patterns that particularly benefit from the present invention are that of colour calibration patterns. Each of the elements of a colour calibration pattern that relates to a primary colour of the printer have been found to be easily separable. That is they are susceptible to being located in different relative positions to each other within the test pattern without affecting the accuracy of the colour calibration. By primary colours of the printer what is meant is one of the relatively few colours a printer can print that is not composed of a mixture of other colours. For example, for many inkjet printers this would be cyan, magenta, yellow and black, although other arrangements having more, less or different colours are known and included within the scope of the present invention.

Furthermore it has also been found that elements of the colour calibration test pattern relating to a single primary colour can be divided further into sub-elements comprising for example a patch of colour of a fixed density. The position and even the size and/or number of these sub-elements can then be adjusted, according to preferred embodiments of the present invention, so as to ensure that the overall test pattern can most optimally be printed on a particular size piece of print medium. Most preferably, there is a lower limit to the number and/or size of the sub-elements used which ensures that the operational parameter of the printer being measured, for example the colour calibration, can still be measured to a desired degree of accuracy.

Alternatively, either the size of at least one sub-element or the number of sub-elements to be printed or both the size and the number of sub-elements is adjusted in accordance with the determined size of the print medium, to substantially maximise the accuracy with which the operational parameter of the printer may be determined. Hence by determining the size of the print medium, the whole of, for example, the width of the print media can be utilised to increase the accuracy with which the operational parameter of the printer can be determined. Thus is particularly advantageous when it can be achieved without expending further media than would be expended without increasing the size or number of sub-elements.

In addition to colour calibration test patterns, the techniques of the present invention are applicable to numerous other test patterns, in particular diagnostic test patterns in which the relative positioning of elements of the test patterns is not crucial to the functioning of the test pattern. For example, test patterns comprising images which are printed with different settings of one or more printer parameters either to allow the user to chose a preferred setting or to be automatically assessed by the printer.

According to a second aspect of the present invention, there is provided a printing apparatus having a settable operational parameter and comprising a print engine capable of receiving instructions to print data, a media advancing mechanism into which print media is loadable, media measurement means for measuring the size of loaded print media, a memory for storing a printable test pattern having a plurality of separable elements, and a processor having an input for receiving size data regarding the presently loaded print medium from the media measurement means and an output to the print engine for passing instructions to print a test pattern. The processor, in use, formats the plurality of separable elements of the test pattern relative to each other so that the whole test pattern when printed expends a substantially minimum amount of print media.

Specific embodiments of the present invention will now be described by way of example only and with reference to the following drawings, in which:
Figure 1 is a perspective view of a large format inkjet printer incorporating features of the present invention;
Figure 2 is a close-up view of the carriage portion of the printer of Figure 1, show the carriage scan axis and the carriage mounted optical sensor;
Figure 3 is a close-up view of the media advance mechanism of the printer of Figure1, showing the carriage portion in phantom lines;
Figure 4 is a cross-sectional view through the optical sensor;
Figure 5 is a graph of the desired electronic colour density value input to a printer against the printed colour density value achieved by the printer;
Figure 6 is one of a plurality of printed colour calibration test patterns according to an embodiment of the invention which has one colour ramp per row, reproduced not to scale;
Figure 7 is one of a plurality of printed colour calibration test patterns according to an embodiment of the invention which has two colour ramps per row, reproduced not to scale;
Figure 8 is one of a plurality of printed colour calibration test patterns according to an embodiment of the invention which has three colour ramps per row, reproduced not to scale;
Figure 9 is one of a plurality of printed colour calibration test patterns according to an embodiment of the invention which has four colour ramps per row, reproduced not to scale;
Figure 10 is a schematic representation of the colour calibration test pattern of Figure 6 printed on a roll of print media;
Figure 11 is a schematic representation of the colour calibration test pattern of Figure 9 printed on a roll of print media;
Figure 12 is a flowchart showing a colour calibration test pattern layout selection algorithm according to an embodiment of the invention;
Figure 13 is a flowchart showing a colour calibration test pattern layout selection algorithm according to an alternative embodiment of the invention, and
Figure 14 is a schematic representation of a colour calibration test pattern which has been optimised to maximise the accuracy of the colour calibration, printed on the same roll of print media as shown in Figures 10 and 11.

A typical embodiment of the invention is exemplified in a large format colour inkjet printer (sometimes know as a plotter) and in relation to the colour calibration test pattern for such a printer. However, it will be appreciated by those skilled in the art, that the present invention has application to many other types of printer and types of test pattern.

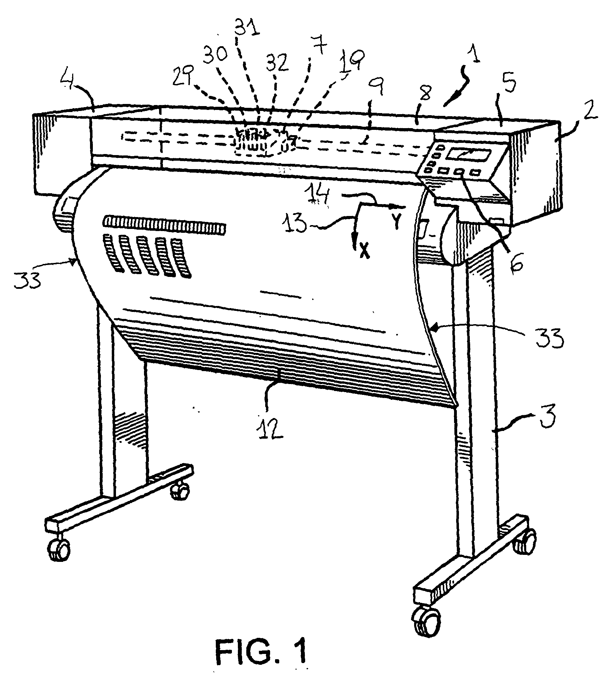

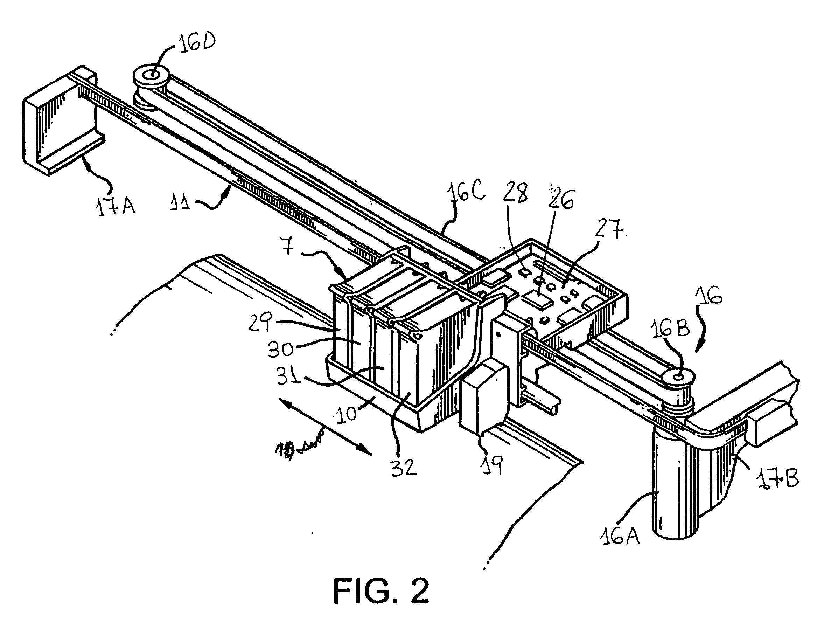

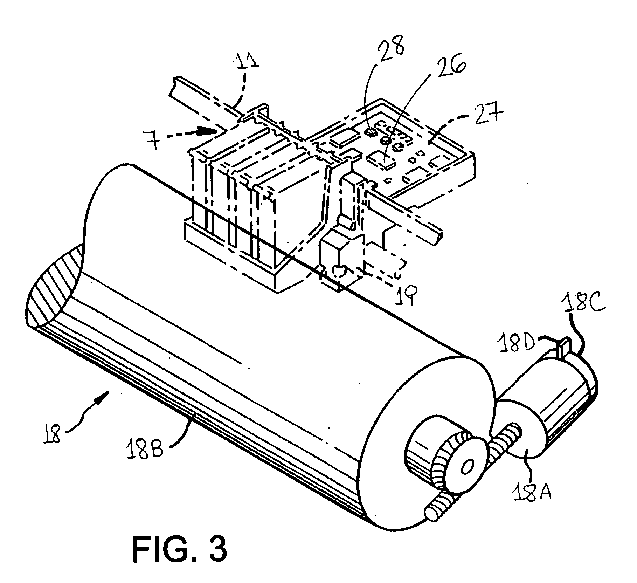

Figure. 1 is a perspective view of a large format inkjet printer 1 having a housing 2 mounted on a stand 3. The housing has left and right drive mechanism enclosures 4 and 5. A control panel 6 is mounted on the right enclosure 5 via which the user may input data to the printer. A carriage assembly 7, illustrated in phantom under a cover 8, is adapted for reciprocal motion along a carriage bar 9, also shown in phantom. The position of the carriage assembly 7 in a horizontal or carriage scan axis is determined by a carriage positioning mechanism 10 with respect to an encoder strip 11 (see Figure 2). A print medium 12 such as paper is positioned along a vertical or media advance axis by a media axis drive mechanism (not shown). The media advance axis, also known as the X axis is denoted as 13, and the scan axis, also know as the Y axis, is denoted as 14. As shown in Figure 1, the printer 1 is loaded with a roll of print media 12 which is held in rollfeed housing 15. The end of the roll of media extends out of the housing 15 through the print zone of the printer, located below the carriage assembly 7, and out the front of the printer. Although not shown in Figure 1, a cut sheet of media may be loaded into the front of the printer 1 where the media positioning system shown in Figure 3 will draw the sheet into the printer. The user may switch between printing on roll media and printing on cut sheet at will.

Figure 2 is a perspective view of the carriage assembly 7, the carriage positioning mechanism 16 and the encoder strip 17. The carriage positioning mechanism 16 includes a carriage position motor 16A which has a shaft 16B which drives a belt 16C which is secured by idler 16D and which is attached to the carriage 7.

The position of the carriage assembly in the scan axis is determined precisely by the encoder strip 11. The encoder strip 11 is secured by a first stanchion 17A on one end and a second stanchion 17B on the other end. An optical reader (not shown) is disposed on the carriage assembly and provides carriage position signals which are utilised to achieve image registration when printing and distance measurement when the carriage is scanning a printed test pattern.

Figure 3 is a perspective view of a simplified representation of a media positioning system 18 which can be utilised in the printer 1. The media positioning system 18 includes a motor 18A which is normal to and drives a media roller 18B. The position of the media roller 18B is determined by a media position encoder 18C on the motor. An optical reader 18D senses the position of the encoder 18C and provides a plurality of output pulses which indirectly determines the position of the roller 18B and, therefore, the position of the media 12 in the Y axis. Also seen in Figure 3 is the carriage mounted optical sensor 19 which is utilised to optically scan printed test patterns and to measure the width and height of a loaded print medium.

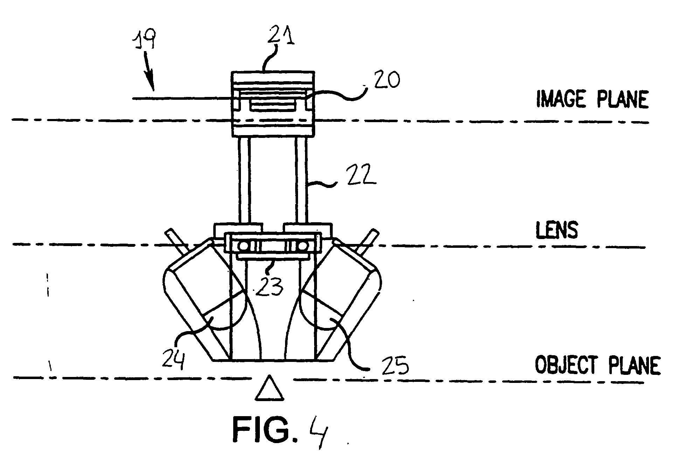

Figure 4. is a cross-sectional view through the optical sensor 19 . The sensor 19 includes a photocell 20 within a cover 21, a holder 22, lens 23, and two LEDs 24 and 25. One LED 24 is blue and is used to scan black, magenta and yellow printed colours and the other LED is amber and is used to scan cyan colours, which are harder to detect accurately when using the blue LED.

The printer 1 has four inkjet print cartridges 29, 30, 31 and 32 that store ink of different colours, e.g. cyan, magenta, yellow and black ink, respectively. As the carriage assembly 7 translates relative to the medium 12 along the X and Y axes, selected nozzles in the inkjet print cartridges are activated and ink is ejected onto the medium 12. The colours from the four cartridges are mixed to obtain any other particular colour.

Referring back to Figure 3., the media and carriage position information from the encoder strip and the media position optical reader 18D is provided to a processor 26 on a circuit board 27 disposed on the carriage assembly together with data from the optical sensor 19 for use in connection with test pattern printing and scanning techniques of embodiments of the present invention. Also on circuit board 27 is a memory element 28 in which the various test pattern elements are stored for access by processor 26.

A implementation of an embodiment of the present invention will now be described in general terms, prior to giving a more detailed description of a particular test pattern related to colour calibration.

In general, once it has been determined by the printer 1 that a test pattern is required or alternatively once the user has initiated the printing of a test pattern, the width and/or height of the medium loaded in the printer is measured. This is achieved for the width by activating one of the LEDs 24 or 25 while scanning the carriage assembly 7 across the medium in the Y axis. The edges 33 of the medium are detected by the optical sensor 19 as a change in the signal received by the photocell 20 and this is communicated to the processor 26 together with the relevant carriage position given by the encoder strip 11. If a cut sheet has been loaded and it is thus necessary to measure the height of the sheet in the X axis, the cut sheet is moved past the carriage assembly 7 by the media positioning system 18 while one of the LEDs is illuminated. The top and bottom edges (not shown) of the cut sheet are detected in similar manner and the relevant positions of the cut sheet are passed to the processor 26 by the optical reader 18D. As will be appreciated by those skilled in the art, while the optical sensor 19 may determine the precise position of the edges of the medium 12, very few printers are capable of printing right up to these edges. Thus in determining the size of the medium 12, the processor 26 takes into account any non-printable area close to the edges of the media and in its subsequent calculations of test pattern layout utilises the printable size of the medium.

The processor 26 then accesses the relevant test pattern elements stored in memory 28 and calculates based on the measured medium size and the test pattern element characteristics what the test pattern layout should be. Once this has been completed the test pattern is printed by the inkjet cartridges 29, 30, 31, 32 held in the carriage assembly 7 as the assembly is scanned over the medium in the Y axis and the medium is moved past the assembly in the X axis.. The printed test pattern is then scanned, using the appropriate LEDs, by the optical sensor 19 while the assembly 7 and medium are moved in a similar manner as during the printing of the test pattern. The optically scanned data is passed to the processor 26 which then assesses if the relevant printer parameter being evaluated by the particular test pattern printed requires correction or adjustment and if so changes it .

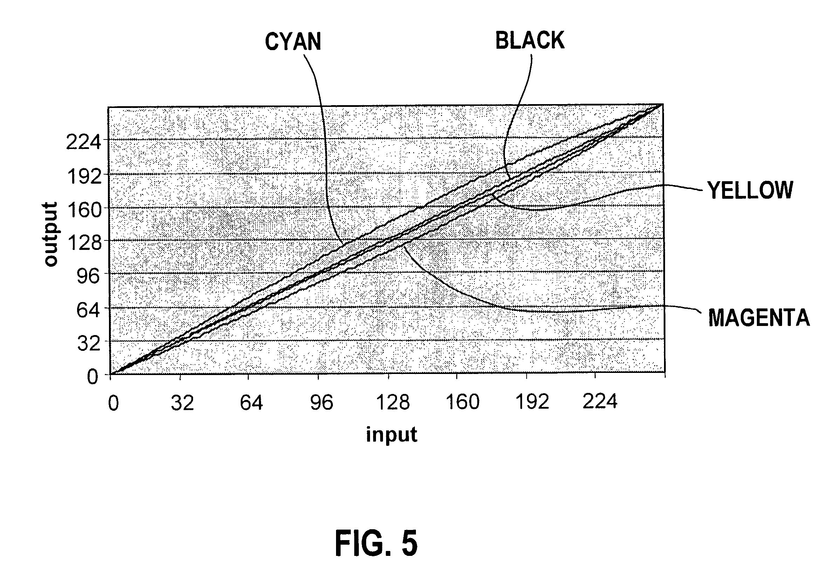

The use of embodiments of the present invention in printing and interpreting a particular test pattern, namely a colour calibration test pattern for a four colour inkjet printer, will now be described. As is know in the art, four colour printers using CMYK (cyan, magenta, yellow and black) primary colours require calibration if colour is to be reproduced accurately and consistently. While every effort is made when designing and manufacturing printers to ensure that each printer reproduces the same input colour (which may for example be in a 256 bit or contone format) in an accurate and consistent manner when printing using combinations of CMYK, there are nevertheless differences between each manufactured printer and the nominal or ideal printer. Again as is known in the art, the colour maps and halftoning algorithms of the printer are designed to operate with the nominal printer and one way of calibrating each printer to behave more similarly to the nominal printer is to print a test pattern which is measured by the printer and used to alter one or more parameters within the image pipeline of the printer. Figure 5 shows an example of the response function of each primary colour of a particular printer to an input contone value. Ideally, an electronically colour value input to the printer, for example from a computer connected to the printer, would lead the printer to print an output colour on the print media having the same measurable contone value. However, as can be seen from Figure 5, the input and output values can in practise vary significantly, particularly for the middle contone values. To correct or linearise these responses, several colour patches of different contone values are printed for each primary colour, know as a colour ramp. These patches are then scanned by the optical sensor which makes densitometric measurements used to calculate correction values for each contone level for each primary colour. These corrections values can be stored as a transfer function for each primary colour, which is applied prior to printing in a known manner.

Colour calibration is important because accurate and reproducible colours are a highly desirable and noticeable feature of a printer, but also because a number of factors may affect the colour calibration of a printer, requiring it to be performed many times. Any change in the printer or its environment may affect the colour calibration for example each media type used with the printer generally requires a different colour calibration since the media ink interaction affect the ink drop size and thus the colour. So if the type of media is changed e.g. from glossy to semi-glossy, from canvas to transparency, from vinyl to tracing paper etc. a new colour calibration needs to be performed. Clearly, once a colour calibration has been performed for a particular media, the appropriate CMYK transfer functions may be stored within the printer, if the printer has this functionality. Changes in the ambient temperature and humidity can also affect colour reproduction and some printers have temperature and humidity sensors that can trigger colour calibration algorithms. For many inkjet printers the largest affect on colour calibration is when one of the inkjet print cartridges 29, 30, 31, 32 of the printer is changed. Often the variation in ink drop size between different inkjet cartridges is such that the colour calibration is dramatically altered when one of the CYMK cartridges is changed. Indeed, all stored colour calibration transfer functions for all different media types are normally deleted from the printer when the cartridges are changed since they will not be accurate for the new cartridges and must be performed again.

Default values are normally provided for colour calibration parameters so that a user need not always accept the printers request to perform a colour calibration if he is less concerned about colour accuracy and consistency and does not want to expend ink and media. Alternatively, if a user is very sensitive to these issues, he may manually initiate a colour calibration process at any time.

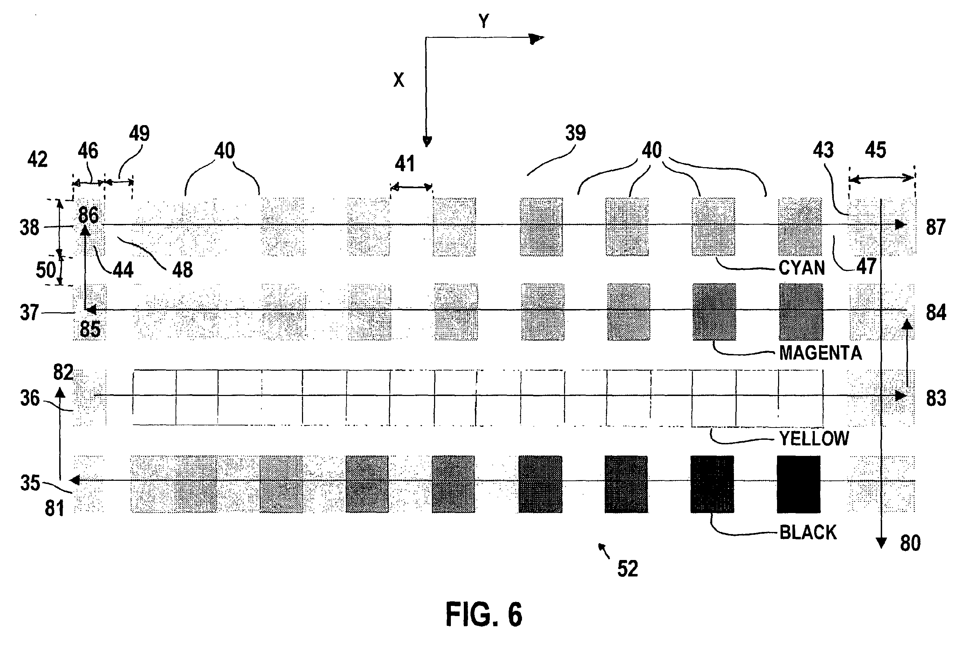

Figure 6 shows an example of one of the several possible colour calibration pattern layouts according to a preferred embodiment of the present invention. The pattern 52 has four basic elements 35, 36, 37 and 38 which are respectively the colour ramps for K, Y, M and C. Also shown for orientation are the Y or carriage scan axis and the X or media advance axis.

Each colour ramp has the same structure which will be described with reference to the cyan ramp 38. There is a central portion 39 consisting of sixteen adjacent colour patches 40, each colour patch having a different ink density or contone value. In this example high density patches are located adjacent to low density patches, alternatively the patches could be arranged in monotonically increasing order of ink density or in any other order that is found to work well with the optical sensor 19. The greater the number of patches that are used in a colour ramp the more accurate the corresponding primary colour transfer function for colour correction will be, since more samples for the curves shown in Figure 5 can be taken. However, clearly more patches will increase the size of the test pattern and the amount of media (and indeed ink) expended. The number of colour patches 40 to be printed in any particular colour ramp can be determined, by embodiments of the present invention, dependent on the measured size of the loaded media. This is also true of all the other size parameters of the test pattern that will be described below. The minimum recommended number of colour patches for the presently described printer is eight. Each colour patch 40 has a specific width 41 and height 42. The wider a colour patch is made the more accurate the optical sensor reading taken from it will be since the densitometric value will be an average of a greater number of samples. However, larger patch width will clearly increase the overall size of the colour ramp and hence the test pattern. Also, since the colour patches 40 represent the smallest separable sub-element of the present test pattern, their width should be less than the minimum medium width that the printer can handle. For the particular printer described, the minimum recommended colour patch width is 120 pixels and the actual value used is 140 pixels, which corresponds to a printed width 41 of approximately 6mm. The minimum height 42 of the colour patches 40 is determined by the visual field of the optical sensor 19 and by its position accuracy. For the present printer it is set to 200 pixels, corresponding to a printed height of approximately 8mm which gives a reasonable margin for positioning robustness. The minimum recommended height is 100 pixels.

At either end of the central portion 39 is a black mark patch 43 and 44. These mark patches are used both as a position reference for the optical sensor 19 and to heat the inkjet print cartridges 29, 30, 31 and 32. The mark patches should thus have a sufficient ink density to ensure that they are easily and accurately detectable by the optical sensor 19. Heating of the cartridges is important since the ink drop volume of drops ejected by the cartridge can be temperature dependent and this will greatly affect the colour calibration. The cartridges are thus heated to a standard operating temperature prior to printing the colour patches 40. The heating of the cartridges is affected both by the ink density of the mark patches 43 and 44 and by their size. A minimum width of at least 120 pixels (@600dpi) corresponding to a printed width of approximately 5mm is recommended in order to properly heat the cartridges. The mark patch 43 at the right hand side of the colour ramp 38 has a width 45 which is approximately twice the width 46 of the mark patch 44 at the left hand side of the colour ramp 38 i.e. approximately 10mm. The right hand mark patch 43 has a greater width so that it is easier for the optical sensor 19 to encounter it when scanning in the X axis since the scanning of the test pattern is commenced from this right hand side of the pattern as will be described below.

Between each mark patch 43 and 44 and the central portion 39 are space patches 47 and 48 of equal width 49 where no ink is deposited on the medium. These space patches separate the mark patches from the central portion 39 and also allow the optical sensor 19 to take a measurement from the medium at the start and end of the scanning of the central portion 39 of the colour ramp 38. This can be used to help in the calibration of the optical sensor 19 for example by providing a fixed reference against which any drift in the output intensity of the LEDs 24, 25 can be compared. The space patch should be at least 120 pixels wide, corresponding to 5mm, in order to allow the medium to be accurately measured by the optical sensor 19.

Each of the colour ramps 35, 36, 37 and 38 is separated from the others by a row spacing 50. This is required to prevent the ink from one ramp interacting with that from a neighbouring ramp. The row spacing 50 is set to 50 pixels for the present printer, corresponding to approximately 2mm on the media.

As stated above the test pattern 52 has four colour ramps, one for each of the primary colours of the printer. While it is possible to calibrate fewer than all the primary colours (and thus obtain a smaller test pattern) it is unlikely to be desirable to do this unless there is a specific reason. For example, it may be desired to use only the black cartridge with a particular media, in which case a colour calibration could be performed with only a black colour ramp 35 and a single transfer function for that media would be stored. Alternatively, for a different media a printmode may be utilised that only employs CYM and not K and which generates a so called composite black colour from combinations of C,Y and M. In this case a colour calibration could be performed without the black ramp 35. Also, as is known, some printers have six or more primary colours or have light dye loads of some primary colours and in these cases it may be necessary to perform colour calibrations with more colour ramps.

A number of variables or parameters of the test pattern of Figure 6 have been described above and all of these may be adjusted by the processor 26 of the printer when determining the layout of a particular test pattern for a particular sized print medium. They may be summarised as follows:
Width of the mark patches 46, 45
Width of the space mark 49
Width of the colour patch 41
Height of the patches 42
Row spacing 50
Number of colour ramps
Number of patches 40 per colour ramp

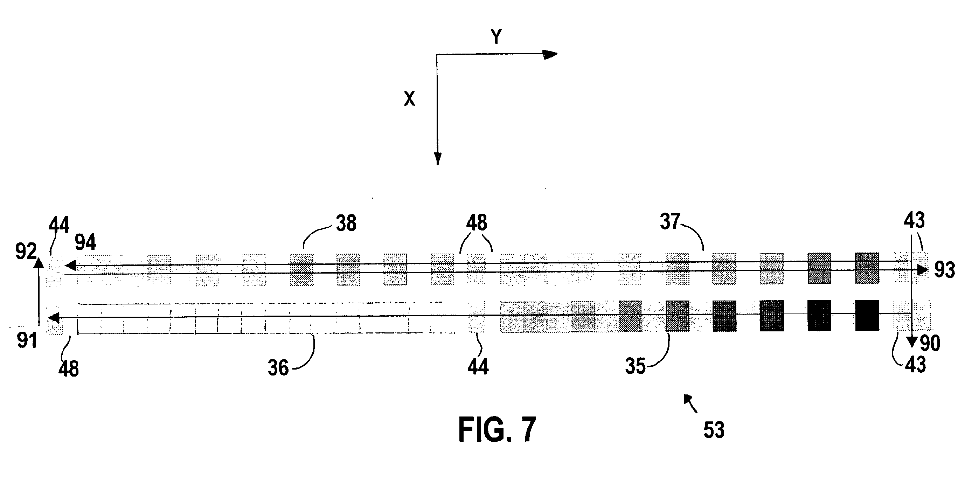

However, for the purpose of this embodiment of the invention, these parameters are seen as sub-elements of the test pattern and the basic separable element is seen as the colour ramps themselves. Thus the variable that is best utilised to determine the layout of the test pattern in this particular case is the number of colour ramps per row. Figure 6 shows a test pattern 52 having one colour ramp per row and Figures 7, 8 and 9 showing respectively test patterns 53, 54 and 55 having two, three and four colour ramps per row, as will now be described.

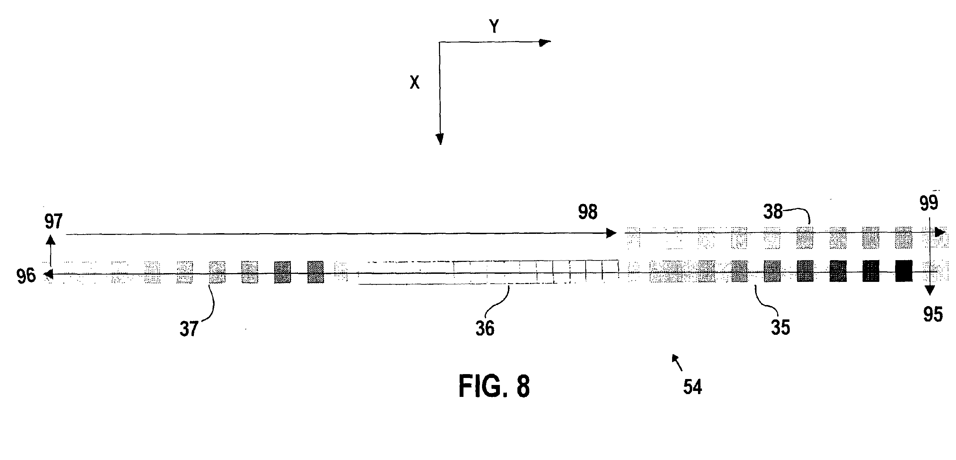

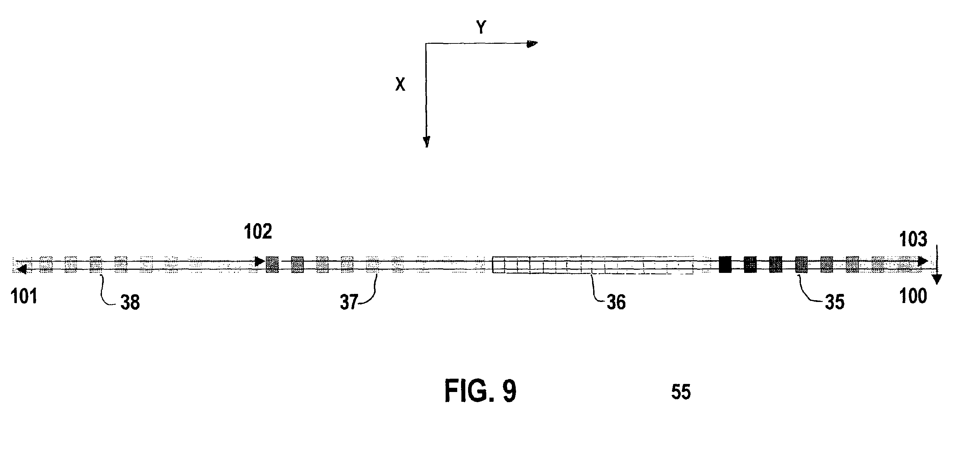

Figure 7 shows a test pattern 53 with a first row having a K colour ramp 35 and a Y colour ramp 36 separated by a mark patch 44 and space marks 48. At the right hand end of the row is a wider mark patch 43. A second row, above the first row, comprises an M colour ramp 37 and a C colour ramp 38. Figure 8 shows a test pattern 54 with a first row having consecutively K, Y and M colour ramps 35, 36 and 37 and a second row above the first row having a single C colour ramp 38. Figure 9 shows a test pattern 55 with a single row having four colour ramps K,Y,M and C separated by mark patches 44 and space marks 48 and having a single wide mark patch 43 at the right hand side. The total size of the test pattern of Figure 6 is approximately 13cm wide by 4cm high. That of pattern 53 of Figure 7 is 24cm wide by 2cm high, that of pattern 54 of Figure 8 is 36cm wide by 2cm high and that of pattern 55 of Figure 9 is 48cm wide by 1cm high.

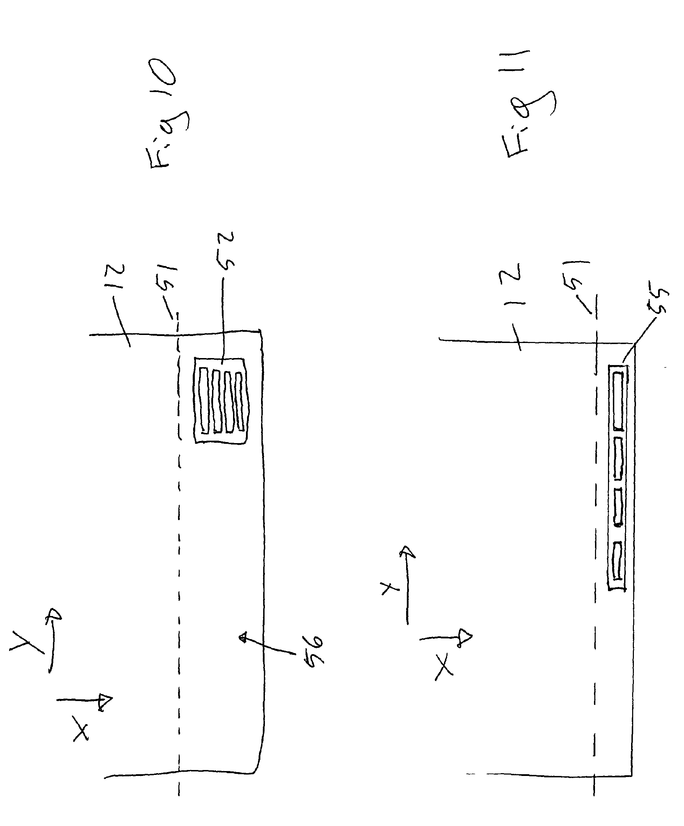

From Figures 6, 7, 8 and 9 it can be seen that the layout of Figure 6 would be a good choice if a small piece of the media for which the user wishes to perform a colour calibration is available, for example an A5 sized piece. Conversely, if the user has a roll of this same media loaded in the printer and wants to use this for the colour calibration, if the pattern 52 of Figure 6 is utilised a great deal of the media will be wasted. This can be best seen from Figure 10 which is a schematic drawing showing the test pattern of Figure 6 printed in a corner of a sheet of roll feed media 12. Because the roll feed media needs to be cut along the line 51 before it can be used again, the media to the left of the test pattern 52 labelled 56 is wasted. Since on many large format inkjet printers rolls of media of 60 inches width or more can be handled, this can be a considerable wastage. Hence, if the roll feed media loaded in the printer is wider than 48cm, than the best choice of test pattern would be the four colour ramp per row pattern 55 of Figure 9. As can be seen from Figure 11, in this case the amount of media expended to perform the calibration is much less than half that expended when the pattern 52 is utilised. The pattern 53 of Figure 7 can be optimally utilised if a piece of media of A4 size is available, in which case it can be used in landscape orientation, or if a roll of media of width more than 24cm but less than 36cm is loaded. The pattern 54 of Figure 8 is optimally utilised with an A3 piece of media again in landscape format, or with a roll of media having a width greater than 36cm but less than 48cm wide.

Hence it can be seen that by providing flexibility in the layout of only these basic elements of the colour calibration test pattern, not only can media be saved but also different sized media can be used to print the test pattern. If for example only a fixed layout test pattern such as pattern 55 is provided (as is the case in prior art printers) then colour calibration cannot be performed unless a media of width greater than 48cm is available.

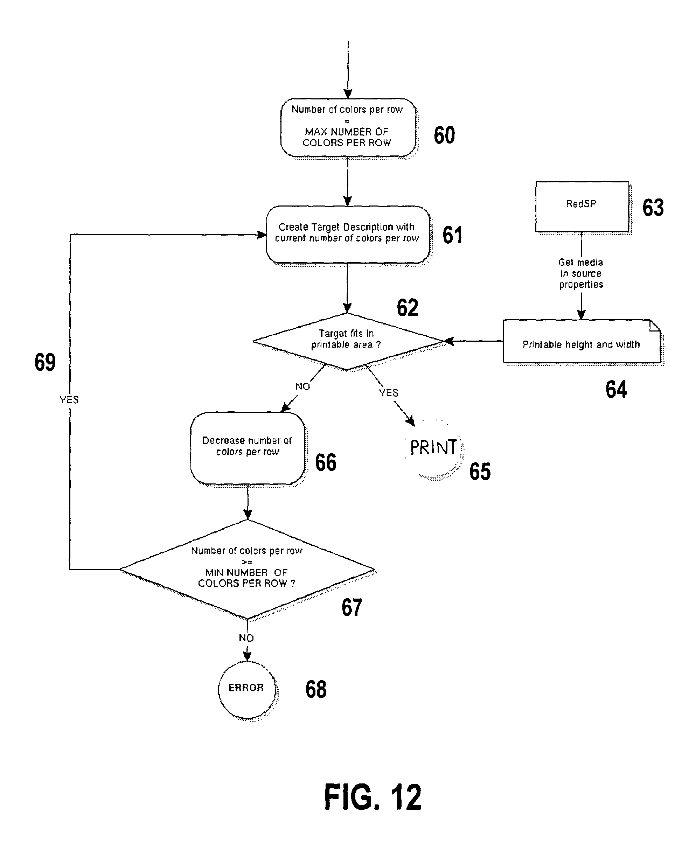

The algorithm used by the processor 26 which may cause one of the four different basic layouts 52, 53, 54 and 55 of the colour calibration pattern to be printed is shown schematically in the flowchart of Figure 12. All other parameters of the test patterns discussed above are set at their default values and only the "Number of colour ramps per row" parameter is tested against the measured width of the loaded print medium. At 60 the Number of colour ramps per row is set to the maximum value, in this example four. Then at 61 a target test pattern description is created with this number of colour ramps per row. At 64 the processor acquires the previously measured printable size of the medium from a store 63. The target test pattern size is compared to the printable size of the medium at 62 and if found to be smaller is printed at 65. If found to be larger, then the Number of colour ramps per row is reduced by one at 66. At 67 this Number is tested to be greater than zero (for example it could reach zero if the medium width is less than 13cm) and if so, is returned via loop 69 to 61 for a new target test pattern to be created with the new Number of colour ramps per row. Thus it can be seen that this simple algorithm attempts to use the maximum width of the medium available and to minimise the height of the test pattern, but progressively reduces the width and increases the height of the test pattern as necessary.

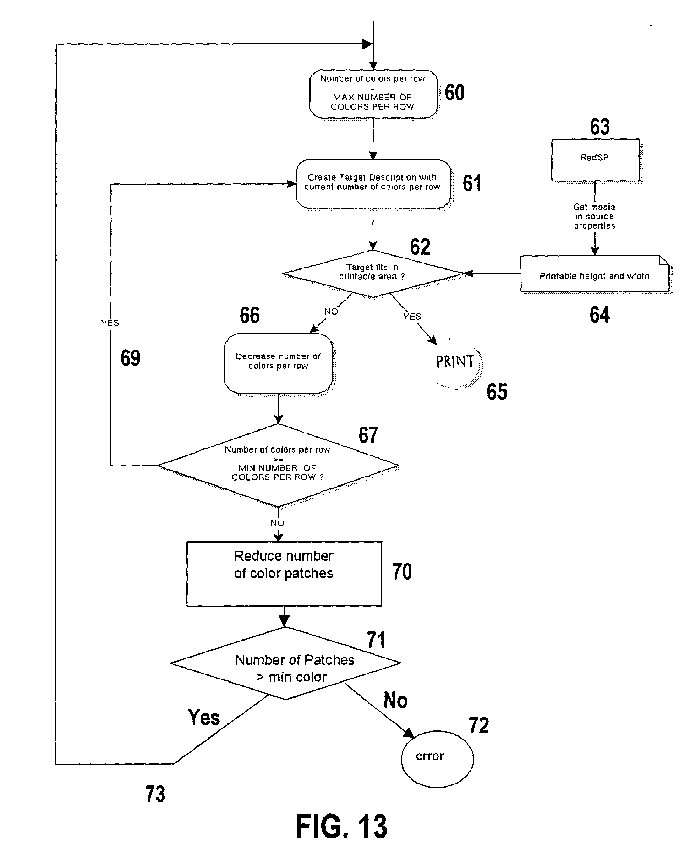

An alternative embodiment of the present invention which utilises one of the above described sub-elements of the test pattern as a variable to be determined dependent on the measured medium size is shown schematically in flowchart form in Figure 13. The upper part of the flowchart is identical to the flowchart of Figure 12 and performs the same function of attempting to maximise the Number of colour ramps per row. However, if a single colour ramp is too wide for the medium, rather than give an error message as at 68 of the Figure 12 flowchart, the number of colour patches 40 of which each colour ramp is composed, is progressively reduced at 70. If the minimum acceptable number of colour patches per colour ramp is reached at 71 then an error is given at 72. If not then control passes back to the start at 60 and the a new target test pattern with a reduced number of colour patches is created.

As will be appreciated, use can be made of one or more of the other sub-elements, discussed above, in a similar manner.

Once a particular test pattern has been chosen and printed it must then be scanned by the optical sensor 19 mounted on the carriage assembly 10 of the printer. Since a description of the location of the test pattern elements has been generated by the processor 26, this can be utilised to direct the scanning process. In general terms the scanning process starts by accurately locating the wide mark patches 43 in the X axis by performing a media movement. Then each of the colour ramps is scanned to find and measure the location of the mark patches 44, 43 at either side and a check is made that the distance between mark patches is what is expected. Then each of the colour patches 40 of each of the colour ramps 35, 36, 37 and 38 is scanned at a slower speed to obtain a densitometric value for the ink density of the colour patch. A check is then made that the minimum number of colour patches necessary have been successfully measured. When scanning the carriage movements are minimised by scanning both from left to right and from right to left.

Also, due to the reflectivity of the different colours and the sensitivity of the photocell 20, when scanning cyan the amber LED is used and when scanning one of the other three colours the blue LED is used. Because of this factor the test pattern 54 shown in Figure 8 has been designed to have the cyan colour ramp 38 in a row of its own and the other three colour ramps 35, 36 and 37 in the other row. This enables the whole of the first row to be scanned with the blue LED and the second row to be scanned with the amber LED. This is much faster and more accurate than needing to use both LEDs for the same row.

The scanning order and direction for measuring the colour patches of each test pattern can be seen in each of the Figures 6, 7, 8 and 9. On pattern 52 shown in Figure 6, scans 80 to 86 are performed with the blue LED and scan 87 is performed with the amber LED. On pattern 53 shown in Figure 7, scans 90 to 93 are performed with the blue LED and scan 94 is performed with the amber LED. On pattern 54 shown in Figure 8, scan 96 is performed with the blue LED and scan 99 is performed with the amber LED. It should be noted that scan 98 can be performed at high speed since a colour ramp is not being measured during this movement. On pattern 55 shown in Figure 9, scan 101 is performed with the blue LED and scan 102 is performed with the amber LED.

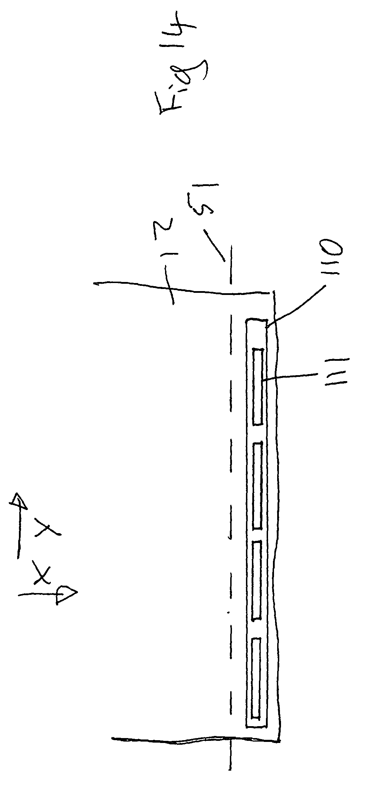

As is evident from the description given above of the various parameters or sub-elements of the colour calibration pattern and the effect of changing their size, there is normally a balance to be struck between a small test pattern and one which accurately calibrates colour or measures another operational parameter of the printer. For example, increasing the number of colour patches 40 or increasing their width 41 will improve the accuracy of the calibration but will also increase the size of the pattern. However, by measuring the size of the print medium loaded in the printer there are opportunities for increasing the size of the pattern to increase accuracy, without increasing the amount of media expended. Figure 14 is a schematic representation of a colour calibration test pattern which has been optimised to maximise the accuracy of the colour calibration, printed on the same roll of print media as shown in Figures 10 and 11. As can be seen, the test pattern 110 comprises four wider colour ramps 111 that themselves are formed from either more or wider, or both more and wider colour patches 40. The test pattern 110 substantially uses the full width of the roll feed media 12 but expends the same amount of media as the test pattern 55 shown in Figure 11, and thus less than the test pattern 52 shown in Figure 10.

## Claims

1. A method of printing a test pattern for determining an operational parameter of a printing device comprising the steps of:
determining the size of a print medium presently loaded in the printing device,
adjusting, in accordance with the determined size of the print medium, the relative position on the print medium of a plurality of elements of the test pattern to be printed and
printing the test pattern on the print medium.

2. A method as claimed in claim 1, wherein, during the adjusting step, the elements of the test pattern are arranged in a layout which substantially minimises the amount of print medium that is expended to print the whole test pattern.

3. A method as claimed in claim 1 or 2, wherein, during the size determining step, only the width of the print medium is determined and during the adjusting step, as many test pattern elements as will fit across the determined width of the print medium are arranged to be printed.

4. A method as claimed in claim 3, wherein once the maximum number of test pattern elements that can be printed across the width of the print medium is reached, any remaining test pattern elements are arranged to be printed subsequent to one or more media advance movements by the printing device.

5. A method as claimed in claim 1 or 2, wherein, during the size determining step, both the width and the height of the print medium is determined.

6. A method as claimed in any preceding claim, wherein the test pattern is held in a memory of the printing device and prior to the printing step said memory is accessed.

7. A method as claimed in any preceding claim, wherein, during the size determining step, the size of the print medium is determined automatically by the printing device.

8. A method as claimed in any one of claims 1 to 6, wherein, during the size determining step, the size of the print medium is determined by a user of the printing device and is input by the user to the printing device.

9. A method as claimed in any preceding claim, comprising the further step of automatically measuring the printed test pattern to determine an operational parameter of the printing device.

10. A method as claimed in claim 9, wherein the automatic measurement of the test pattern comprises optically scanning the elements of the printed test pattern.

11. A method as claimed in claim 10, wherein, during the adjusting step, the relative positioning of the elements of the test pattern are chosen so as to substantially minimise the number of scanning movements required to optically scan the whole of the test pattern.

12. A method as claimed in any one of claims 1 to 8, comprising a further step in which the user of the printing device determines from the printed test pattern an operational parameter of the printing device and enters or adjusts the parameter via an interface with the printing device.

13. A method as claimed in any one of the preceding claims, wherein the test pattern is a colour calibration pattern and each element of the test pattern relates to the calibration of one of the primary colours of the printing device.

14. A method as claimed in claim 13, wherein each element of the test pattern comprises sub-elements and wherein during the adjusting step the relative positions of the sub-elements are adjusted, in accordance with the determined size of the print medium, to substantially minimise the amount of print medium that is expended to print the whole test pattern.

15. A method as claimed in any preceding claim, wherein at least one of the elements of the test pattern comprises a plurality of sub-elements and wherein, during the adjusting step, the number of sub-elements of said at least one element to be printed is adjusted in accordance with the determined size of the print medium, but is not reduced below a minimum number of sub-elements necessary to determine the operational parameter of the printing device.

16. A method as claimed in any preceding claim, wherein at least one of the elements of the test pattern comprises a plurality of sub-elements and wherein, during the adjusting step, the size of at least one sub-element of said at least one element to be printed is adjusted in accordance with the determined size of the print medium, but is not reduced below a minimum size of sub-element necessary to determine the operational parameter of the printing device.

17. A method as claimed in any preceding claim, wherein the test pattern comprises an image.

18. A method as claimed in any preceding claim, comprising the initial step of, prior to determining the print medium size, unloading from the printing device a roll of print medium and loading a sheet of print medium into the printing device.

19. A method as claimed in any preceding claim, wherein, during the adjusting step, the elements of the test pattern are arranged in a layout which substantially maximises the accuracy with which the operational parameter of the printer may be determined.

20. A method as claimed in any preceding claim, wherein at least one of the elements of the test pattern comprises a plurality of sub-elements and wherein, during the adjusting step, either the size of at least one sub-element or the number of sub-elements to be printed or both the size and the number of sub-elements is adjusted, in accordance with the determined size of the print medium, to substantially maximise the accuracy with which the operational parameter of the printer may be determined.

21. A printing apparatus having a settable operational parameter, the apparatus comprising
a print engine capable of receiving instructions to print data
a media advancing mechanism into which print media is loadable,
media measurement means for measuring the size of loaded print media,
a memory for storing a printable test pattern having a plurality of separable elements, and
a processor having an input for receiving size data regarding the presently loaded print medium from the media measurement means and an output to the print engine for passing instructions to print a test pattern,
wherein the processor, in use, formats the plurality of separable elements of the test pattern relative to each other so that the whole test pattern when printed expends a substantially minimum amount of print media.

22. A printing apparatus as claimed in claim 21, further comprising a scanning carriage having a plurality of colour ejection devices and an optical sensor for measuring test patterns, wherein, in use, following the printing of the test pattern by the colour ejection devices, the test pattern is scanned by the optical sensor and the processor calculates from the scanned data a new or adjusted value for a operational parameter of the printing apparatus.
